# EUROPEAN PATENT APPLICATION

(11) **EP 2 736 297 A2**
(43) Date of publication of application: **28.05.2014**
(21) Application number: 13181943.5
(22) Date of filing: 28.08.2013
(51) Int. Cl.: H04W 72/12

(54) **A method for MDT transmission**

(30) Priority: 22.11.2012 EP 12193770; 06.12.2012 US 201261733984 P
(71) Applicant: ST-Ericsson SA, 1228 Plan-les-Ouates (CH)
(72) Inventor: Arunachalam, Jagadeesh, SE-212 24 MALMÖ (SE); Rathony, Béla, SE-234 37 LOMMA (SE)
(74) Representative: Ström & Gulliksson AB

(57) **Abstract**

A method of scheduling a first type of data for transmission on a first radio bearer is disclosed. The method is suitable for a transmitter of a wireless communication device.

The first radio bearer is a signaling radio bearer adapted to carry the first type of data and a second type of data, where the second type of data comprises at least one of Non-Access Stratum (NAS) messages and Radio Resource Control (RRC) messages.

The method comprises assigning a first priority to the first type of data and assigning a second priority to the second type of data (wherein the first priority is lower than the second priority), placing data of the first and second type in a transmission queue based on the first and second priorities, and transmitting data of the first and second type in accordance with the transmission queue.

Corresponding computer program product, arrangement and wireless communication device are also disclosed.

## Description

### Technical Field

The present invention relates generally to the field of scheduling of data for transmission. More particularly, the present invention relates to scheduling of a first type of data in relation to a second type of data.

### Background

Minimization of Drive Tests (MDT) (see e.g. Third Generation partnership project (3GPP) 37.320 "Radio Measurement Collection for Minimization of Drive Tests (MDT) Overall Description Stage 2", and 3GPP 36.805 "Study of Minimization of Drive Tests in next generation Networks") is a 3GPP release 10 feature introduced to enable a user equipment (UE) to collect measurement related logs. The logs are sent to the network and are then used to analyze, for example, coverage holes and other performance aspects of the network deployment.

When the UE is in a connected state (e.g. CELL_DCH or similar), the existing standardized MDT measurement reporting method is used to report measurements to the network. For example, the measurements may be reported to an eNB/RNC (Evolved Universal Mobile Telecommunications System (UMTS) Terrestrial Radio Access Network - E-UTRAN - NodeB / Radio Network Controller). This procedure is called Immediate MDT.

When the UE is in a non-connected state (e.g. IDLE), the UE collects and stores the log for a time period provided by the network. When requested by the network, the UE sends the logged measurements. This procedure is called Logged MDT.

MDT is applicable for both UTRA (Universal Mobile Telecommunications System (UMTS) Terrestrial Radio Access) and E-UTRA (Evolved Universal Mobile Telecommunications System (UMTS) Terrestrial Radio Access) systems and it is expected that this feature will be used by the operators for roll out and maintenance of their live networks. MDT may also be used in other (known or future) communication standards and it should be noted that embodiments may be equally applicable in any such situation.

As mentioned above, the UE may be required to collect and store MDT logs in non-connected states. The logging may typically be configured when the UE is in a connected state, in that the network configures logging in a UE by sending a "LoggedMeasurementConfiguration" message. The "logging interval" information element (IE) provided in this message controls the periodicity for logging measurements. The "logging interval" may typically be equal to the DRX (discontinuous reception) cycle of the UE or to a multiple of the DRX cycle, wherein the lowest value is 1.28 seconds according to a typical 3GPP definition. The "logging duration" IE (typically also provided in the "LoggedMeasurementConfiguration" message) determines how long the UE shall collect logging information, i.e. how long the measurements are to be stored before discarded. The "logging duration" can be as long as 2 hours.

Hence, a UE configured with a large logging duration, can potentially store several kilobytes of logged measurement information (MDT logging data). For example a UE which is logging 1000 bits for each measurement period with a "logging interval" of 1.28 seconds and a "logging duration" of 2 h will store 1000*2*3600/1.28 bits (approximately 6 Mbit or ∼0.7 Mbyte) of MDT logging data. This is an example indication of the maximum amount of data a rel-10 UE may be required to transmit in an MDT report to the network (NW).

Enhancements to MDT (see e.g. 3GPP, RP-111361, Release 11, "Enhancement of Minimization of Drive Tests for E-UTRAN and UTRAN", available from http://www.3gpp.org/ftp/tsg_ran/TSG_RAN/TSGR_53/docs/RP-111361.zip) are being specified as part of a 3GPP Release 11 Work item that introduces logging of new type of measurements to MDT, for example throughput, etc.

Furthermore, it is expected that MDT could be used for performance related logging of new features that would be introduced in the future. All these factors indicate that the amount of logged MDT data will probably increase.

It could even be possible to send traffic from mobile analytics software (like Carrier-IQ, etc., which help operators understand end user web browsing patterns) as MDT messages.

Thus, there is a need for methods and devices for efficiently handling (e.g. scheduling for transmission) large amounts of data, for example, MDT data.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of some embodiments to obviate at least some of the above disadvantages and to provide methods and devices for efficiently handling large amounts of data, for example, MDT data.

According a first aspect, this is achieved by a method of scheduling a first type of data for transmission on a first radio bearer. The method of scheduling the first type of data is a method of a transmitter for a wireless communication device.

The first radio bearer is a signaling radio bearer and is adapted to carry the first type of data and a second type of data. The second type of data comprises NAS messages and/or RRC messages.

The method comprises assigning a first priority to the first type of data and assigning a second priority to the second type of data, wherein the first priority is lower than the second priority, placing data of the first and second type in a transmission queue based on the first and second priorities, and transmitting data of the first and second type in accordance with the transmission queue.

In some embodiments, the method may further comprise discarding data of the first type.

The first type of data may comprise MDT logging data and may be organized in MDT messages according to some embodiments. According to some embodiments, the method may further comprise (after placing the data of the first and second type in a transmission queue and before transmitting (data in accordance with the transmission queue) estimating at least one of an uplink BLock Error Rate (BLER) and a User Equipment (UE) output power, and (if at least one of a first condition and a second condition is fulfilled) suspending the transmission of the data of the first type until neither of the first and second condition is fulfilled. The first condition may be the estimated BLER being larger than a BLER threshold and the second condition may be the estimated UE output power reaching a maximum UE output power.

In some embodiments, the method may further comprise assigning a third priority to a third type of data for transmission on a second radio bearer, wherein the third priority is higher than the first priority. The second radio bearer may be a data radio bearer according to some embodiments.

In some embodiments, the method may further comprise placing data of the first and third type in a transmission queue based on the first and third priorities. In some embodiments, the method of scheduling a first type of data for transmission on a first radio bearer may comprise determining whether there is any data of the first type pending for transmission. The step of determining may be performed in response to a transfer from a non-connected state to a connected state according to some embodiments.

In some embodiments, the step of placing data of the first and second type in a transmission queue may comprise determining whether there is any data of the first type pending for transmission, and (if there is data of the first type pending for transmission) placing at least part of the data of the first type pending for transmission in the transmission queue, determining whether there is any data of the second type pending for transmission, and (if there is data of the second type pending for transmission) placing the data of the second type pending for transmission in the transmission queue.

Generally, placing at least part of the data of the first type in the transmission queue may, for example, be interpreted as placing a limited part of the data (or a sub-set of the data) in the transmission queue. In a typical embodiment, if the amount of data of the first type pending for transmission exceeds a threshold, less than all of the data of the first type pending for transmission is placed in the transmission queue and otherwise all of the data of the first type pending for transmission is placed in the transmission queue. The approach of placing only part of the data of the first type in the transmission queue enables later prioritization of other data over the data of the first type.

Placing the data of the second type pending for transmission in the transmission queue may (according to some embodiments) comprise placing the data of the second type in front of the at least part of the data of the first type in the transmission queue when operating in accordance with Evolved Universal Mobile Telecommunication Standard Terrestrial Radio Access (E-UTRA) according, and placing the data of the second type after the at least part of the data of the first type in the transmission queue when operating in accordance with Universal Mobile Telecommunication Standard Terrestrial Radio Access (UTRA).

The method may further comprise determining whether there is any data of the second type pending for transmission.

If there is data of the second type pending for transmission, the method may comprise prioritizing the data of the second type over the data of the first type. Thus, the method may comprise scheduling the data of the first and second types for transmission such that the data of the second type is transmitted before the data of the first type.

If there is no data of the second type pending for transmission, the method may comprise scheduling the data of the first type for transmission.

If there is no data of the second type pending for transmission, the method may further comprise determining whether there is any data of the third type pending for transmission.

If there is data of the third type pending for transmission, the method may comprise prioritizing the data of the third type over the data of the first type. Thus, the method may comprise scheduling the data of the first and third types for transmission such that the data of the third type is transmitted before the data of the first type.

According to some embodiments, one or more of the first, second and third priorities are based on one or more of an amount of data of the first type pending for transmission, an amount of data of the third type pending for transmission, and an amount of data of the second type pending for transmission.

A second aspect is a computer program product comprising a computer readable medium, having thereon a computer program comprising program instructions, the computer program being loadable into a data-processing unit and adapted to cause the data-processing unit to execute the method according to the first aspect when the computer program is run by the data-processing unit.

A third aspect is an arrangement adapted to schedule a first type of data for transmission on a first radio bearer, wherein the first radio bearer is a signaling radio bearer adapted to carry the first type of data and a second type of data, the second type of data comprising at least one of Non-Access Stratum - NAS - messages and Radio Resource Control - RRC - messages.

The arrangement comprises a prioritizer, a scheduler and a transmission queue.

The prioritizer is adapted to assign a first priority to the first type of data and assign a second priority to the second type of data, wherein the first priority is lower than the second priority. In some embodiments, the prioritizer may be further adapted to discard data of the first type.

The scheduler is adapted to place data of the first and second type in the transmission queue based on the first and second priorities.

The transmission queue is adapted to provide data of the first and second type to a transmitter adapted to transmit the data of the first and second type in accordance with the transmission queue.

In some embodiments, the arrangement may further comprise a transmitter adapted to transmit data of the first and second type in accordance with the transmission queue.

The arrangement may (according to some embodiments) further comprise one or more estimators (adapted to estimate at least one of an uplink BLock Error Rate (BLER) and a User Equipment (UE) output power. The prioritizer may then be further adapted to, in response to at least one of a first condition and a second condition being fulfilled, suspend the transmission of the data of the first type until neither of the first and second condition is fulfilled. The first condition may be the estimated BLER being larger than a BLER threshold and the second condition may be the estimated UE output power reaching a maximum UE output power.

In some embodiments, the prioritizer may be further adapted to assign a third priority to the third type of data, wherein the third priority is higher than the first priority and the scheduler may be further adapted to place data of the first and third type in a transmission queue based on the first and third priorities. A second radio bearer, which is a data radio bearer, is adapted to carry the third type of data.

According to some embodiments, the arrangement may further comprise a determiner adapted to determine whether there is any data of the first, second and/or third type pending for transmission. The determiner may also be adapted to determine an amount of data pending for transmission for one or more of the first, second and third types of data. In such embodiments, the prioritizer may be adapted to base one or more of the first, second and third priorities on the amount of data pending for transmission for one or more of the first, second and third types of data. For example, the arrangement may further comprise a determiner adapted to determine whether there is any data of the first type pending for transmission and whether there is any data of the second type pending for transmission. The prioritizer may be adapted to cause the scheduler to schedule the data of the first and second types for transmission such that the data of the second type is transmitted before the data of the first type if there is data of the second type pending for transmission, and cause the scheduler to schedule the data of the first type for transmission if there is no data of the second type pending for transmission.

A fourth aspect is a wireless communication device comprising the arrangement of the third aspect. The wireless communication device may be compliant with one or more of the Universal Mobile Telecommunication Standard Terrestrial Radio Access Network (UTRAN) and the Evolved Universal Mobile Telecommunication Standard Terrestrial Radio Access Network (E-UTRAN) according to the Third Generation Partnership project (3GPP).

In some embodiments, the third and fourth aspects may additionally have features identical with or corresponding to any of the various features as explained above for the first aspect. For example, the arrangement of the third aspect may be adapted to execute any of the methods disclosed herein.

Thus, according to some embodiments, MDT messages may be treated internally (i.e. within a UE or other suitable arrangement) as lower prioritized compared to non-access stratum (NAS) messages and/or compared to user data (in some situations). During scenarios like, for example, power limitation and/or coverage limitation, the MDT message transmission may be completely suspended according to some embodiments.

According to typical embodiments, the transmission of MDT messages is carefully scheduled within the UE (according to a scheduling method) in order to avoid starvation of NAS messages and/or user data, and to improve overall performance of non-MDT messages.

According to some embodiments, the scheduling method may take one or more of the following factors into account for its transmission decision:
- Size of the logged measurement information.
- Coverage knowledge and channel performance (e.g. block error rate (BLER), Max transmission (TX) power).
- Amount of User data to be transmitted.
- Number of NAS messages and/or user plane data waiting to be transmitted.

One or more of the above factors may be taken into consideration in the MDT message scheduling algorithm in order to not compromise, for example, user data throughput and NAS message starvation. According to some embodiments, the MDT message scheduler considers the above mentioned factors and places the MDT blocks in an appropriate position in the transmission queues. In some situations, the MDT messages can even be suspended for some time.

The method may be implemented in software and may be spread across different layer 2 and layer 3 protocols such as medium access control (MAC), radio resource control (RRC), radio link control (RLC), packet data coverage protocol (PDCP) depending on which radio access technology (RAT) it operates on (UTRA/E-UTRA).

Although MDT transmission is used as an example throughout this disclosure, this is not to be considered limiting. Contrarily, embodiments may be equally applicable to other data transmission that share the same signaling radio bearer as RRC messages and/or NAS messages that have lower or equal priority as the other data.

An advantage of some embodiments is that bad user experience can be avoided by providing priority to user data on Radio Bearers.

Another advantage of some embodiments is that transfer of MDT messages can take place without the user noticing any throughput problems or dropped call problems.

Yet another advantage of some embodiments is that smaller delay/latency is achieved for obtaining certain services that are dependent on completion of NAS procedures. For example, a UE can only be paged in a new location area if the location update procedure is successful. So, delaying a location update procedure to transmit MDT messages may result in the network paging the UE in an old location area. This problem is overcome if embodiments are applied. In another example, a service request procedure (type=data) may be delayed due to transmission of MDT messages, which may result in that no radio bearers (RB, e.g. data radio bearers (DRB)) are set-up and the UE being stuck in IDLE mode when user data needs to be transferred. This problem is overcome if embodiments are applied.

A further advantage of some embodiments is that, by taking coverage related information as an input, unrecoverable error leading to, for example, a dropped call may be avoided.

Embodiments may be applicable for UTRA and/or E-UTRA systems.

### Brief Description of the Drawings

Further objects, features and advantages will appear from the following detailed description of embodiments, with reference being made to the accompanying drawings, in which:
Fig. 1 is a flowchart illustrating example method steps according to some embodiments;
Fig. 2 is a flowchart illustrating example method steps according to some embodiments applicable to WCDMA and LTE;
Fig. 3 is a schematic block diagram illustrating example steps according to some embodiments applicable to WCDMA;
Fig. 4 is a schematic block diagram illustrating an arrangement for a wireless communication device according to some embodiments; and
Fig. 5 is a schematic block diagram illustrating a computer readable medium according to some embodiments.

### Abbreviations

- BLER: Block Error Rate
- DRB: Data Radio Bearer
- eNB: E-UTRA Node B
- E-UTRA: Evolved UTRA
- MAC: Medium Access Control
- MDT: Minimization of Drive Tests
- PDCP: Packet Data Convergence Protocol
- RAT: Radio Access Technology
- RLC: Radio Link Control
- RNC: Radio Network Controller
- RRC: Radio Resource Control
- SRB: Signaling Radio Bearer
- UE: User Equipment
- URB: User plane Radio Bearer
- UTRA: UMTS Terrestrial Radio Access Network

### Detailed Description

In an E-UTRAN system, the logged MDT measurements are sent on signaling radio bearer 2 (SRB2) (see e.g. 3GPP 36.331, Version 10, "E-UTRA Radio Resource Control (RRC) Protocol Specification"). Apart from the logged MDT measurement information, SRB2 is used for transmitting NAS messages. SRB1 is the other signaling radio bearer. SRB1 has higher priority over SRB2 and NAS messages are transmitted over SRB1 until SRB2 is configured. Then, when SRB" has been configured, all NAS messages are transmitted over SRB2.

As mentioned above, the amount of logged measurement MDT information data could potentially be large and since MDT messages share the same signaling radio bearer (e.g. SRB2) as other NAS messages, transmission of NAS messages could be delayed when the amount of MDT data is large. It is sometimes important that NAS messages are transmitted quickly since in some cases the UE is not allowed to access particular services until a NAS procedure is completed.

Another problem is that, since the DRB's usually have lower priority than the SRB's, data transmission on a user plane bearer could be delayed while the logged MDT measurement report is transmitted. This could result in lower throughput and hence bad user experience. A user could autonomously start a high amount of data transfer while MDT transmission is ongoing. This, coupled with the fact that (in some deployments) the network typically cannot suspend transmission of logged measurement information, may make it impossible for the network to react and do corrective measures in such a situation.

The problem is also applicable for UTRA systems, where logged MDT information is sent on SRB4 (see e.g. 3GPP 25.331, Version 10, "UMTS Radio Resource Control (RRC) Protocol Specification"). SRB4 is used for low priority NAS signaling messages (e.g. SMS) in addition to logged MDT measurement messages.

To summarize, one problem with the existing standardized MDT solutions for UTRA/E-UTRA is that MDT messages are sent on the same SRB as NAS messages (resulting in that they get the same priority). Since the amount of data to be transmitted in MDT messages may be very large this can result in long latency/delay for NAS messages. Another problem with the existing standardized MDT solutions for UTRA/E-UTRA is that the priority of SRBs compared to (D)RBs are higher in normal UTRA/E-UTRA deployments. This may lead to worsen user data performance (throughput/latency) when large and/or frequent MDT messages are transmitted. This situation will typically become even worse when the UE is, for example, coverage limited.

In the following, embodiments will be described where it may be specified that MDT messages can assume lower priority over NAS messages, thus prioritizing NAS messages over MDT messages. This differs from a typical conventional implementation where message transmission on a SRB is done using a first-in-first-out approach. Alternatively or additionally, some embodiments may prioritize data bearers over MDT. Typically, fast arrival of MDT messages in the network is not an important aspect.

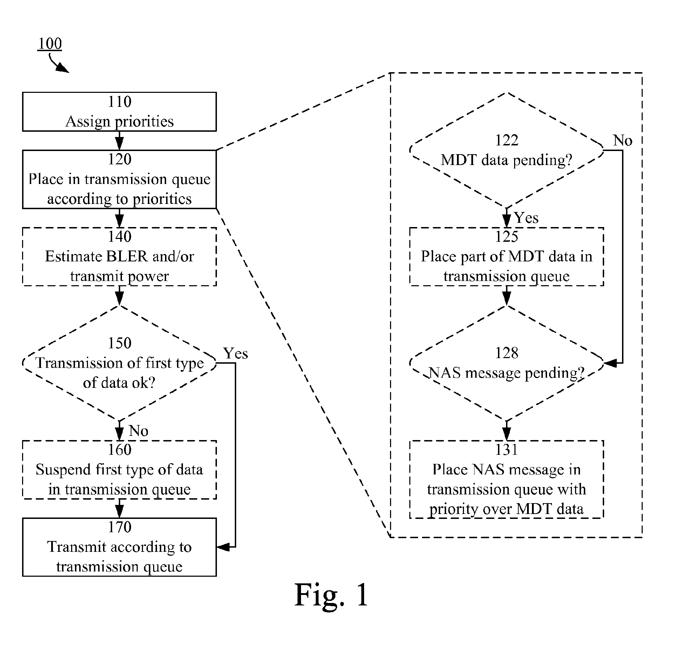

Figure 1 illustrates an example method 100 where MDT data is scheduled for transmission according to assigned priorities.

The method starts in step 110 where priorities are assigned to various types of data to be scheduled.

For example, step 110 may comprise assigning a first priority to a first type of data (e.g. MDT logging data organized in MDT messages) and assigning a second priority to a second type of data (e.g. NAS messages and/or RRC messages), wherein the first priority is lower than the second priority and wherein first type of data and a second type of data are to be carried by a first (signaling) radio bearer.

Additionally, step 110 may comprise assigning a third priority to a third type of data, wherein the third priority is higher than the first priority and wherein the third type of data is to be carried by a second (data) radio bearer.

In step 120, the various types of data are placed in a transmission queue based on the priorities assigned in step 110.

In one example, step 120 may comprise determining whether there is any data of the first type (MDT data) pending for transmission as illustrated by sub-step 122 and, if so, placing at least part of the data of the first type in the transmission queue as illustrated by sub-step 125. According to this example, it is then determined in sub-step 128 whether there is any data of the second type (e.g. NAS messages) pending for transmission as illustrated by sub-step 128 and, if so, placing the data of the second type in the transmission queue as illustrated by sub-step 131. In E-UTRA, the data of the second type may be placed in front of the data of the first type in the transmission queue, while in UTRA, the data of the second type may be placed after the at least part of the data of the first type in the transmission queue.

Optionally, an uplink BLER and/or a UE output power are estimated in step 140 and used in step 150 to determine whether or not to transmit data of the first type at all. If it is determined to not transmit data of the first type, such transmission is suspended in step 160 (for example by removing the corresponding messages from the transmission queue or by rearranging the transmission queue). The determination in step 150 may, for example, comprise determining if the estimated BLER is larger than a BLER threshold and/or if the estimated UE output power reaches a maximum UE output power.

In step 170, data is transmitted in accordance with the transmission queue.

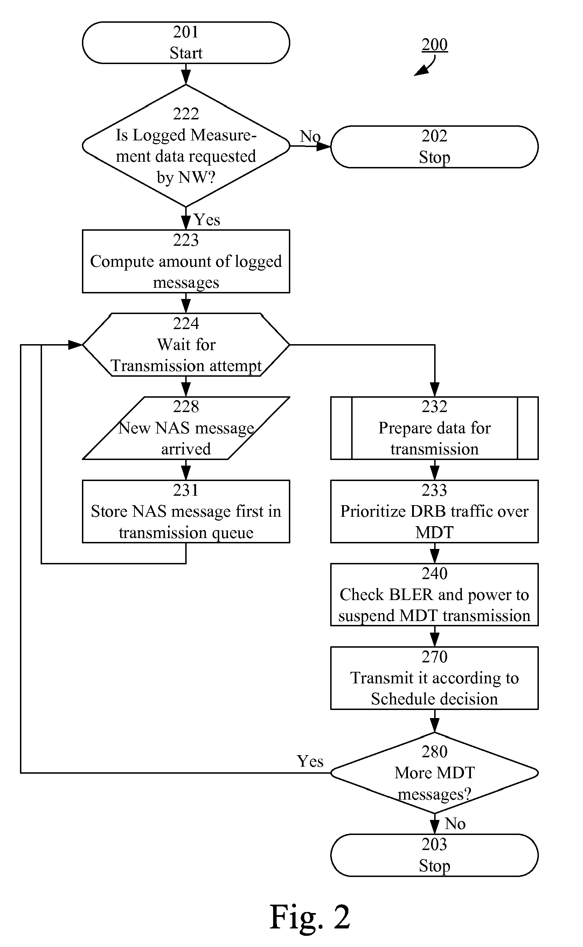

An example embodiment will now be described (see also the example method 200 of Figure 2). The steps in this description provide an example of general design aspects. Thereafter, more detailed proposals of example embodiments for UTRA (wideband code division multiple access - WCDMA) and E-UTRA (long term evolution - LTE) are also provided.

The example method 200 starts in step 201.
1. In step 222, the UE checks if Logged measurement data is requested by the Network, i.e. if the UE has received a "UE Information Request" message. The prerequisite is that the UE has received a "LoggedMeasurementConfiguration" message earlier and that measurement logging was carried out. If not, the example method 200 is ended in step 202, otherwise the example method 200 proceeds to step 223.
2. Based on the stored logs, the amount of "UEInformationResponse" messages needed to be sent to complete the procedure is calculated in step 223. Then X (X is configurable and/or dynamically changed in runtime) MDT messages from the MDT message buffer are stored in the layer 2 (L2) buffer for transmission. This limitation of X is done in order to not fill up the L2 transmission queue with a too large number of MDT messages. (This is one embodiment of the step of placing at least part of the data of the first type in the transmission queue, where X is the value of a threshold determining how much data of the first type should be placed in the transmission queue.)
   Note: This part of storing different amount of MDT messages in L2 works a bit different for WCDMA and LTE since the integrity protection function is deployed differently between WCDMA and LTE. This is described in more detail further below.
3. Whenever a new NAS message becomes available (step 228) this is stored in the L2 buffer for transmission (step 231). For LTE it is placed in front of all MDT messages. For WCDMA it needs to be placed after the last MDT message (due to the Integrity Protection function).
4. When a transmission attempt is occurring (step 224) and data is prepared for transmission (step 232) at L2, a set of scheduling rules related to MDT messages may be applied before transmission is performed in step 270. Note that these rules are optional and may be configured on/off:
   a. Step 233: A check is done to determine if there are data belonging to other Radio Bearers (RBs) that have the same or lower medium access control (MAC) logical channel priority compared to MDT messages. If these exist and there are no NAS messages queued for transmission this other RB data becomes higher prioritized compared to the MDT messages (i.e. the logical channels are prioritized higher than the SRB carrying the MDT messages).
   b. Step 240: An estimation of the uplink BLER is done and if the estimation shows a large BLER the transmission of MDT messages are suspended until the BLER improves.
   c. Step 240: An estimation of the UE output power is done. If transmitting non-MDT data (signaling messages and/or user data) already makes the UE reach the maximum UE output power, then the transmission of MDT messages are suspended.
5. The above steps are repeated as long as there are MDT messages to be transmitted (step 280). Then the example method 200 is ended in step 203.

### Detailed description of an example design in LTE

The MDT messages are submitted when they become available in RRC to the PDCP queue for transmission. This can be done since there is no integrity protection and no RRC sequence number so when a NAS message arrives it can be put first in the PDCP queue, i.e. in-front of any already queued MDT messages. When data is scheduled for transmission the scheduling rules as described above may apply taken into account BLER, max output power status and logical channel transmission queue status. In this example, it is assumed that the data is buffered at the PDCP layer until it is scheduled for transmission. In examples where this is not the case, i.e. where all data is submitted to lower layers as fast as possible, a similar solution as described below for WCDMA can be implemented for the MDT messages. Then, the MDT messages are buffered inside PDCP and new MDT messages are submitted based on feedback from the lower layer.

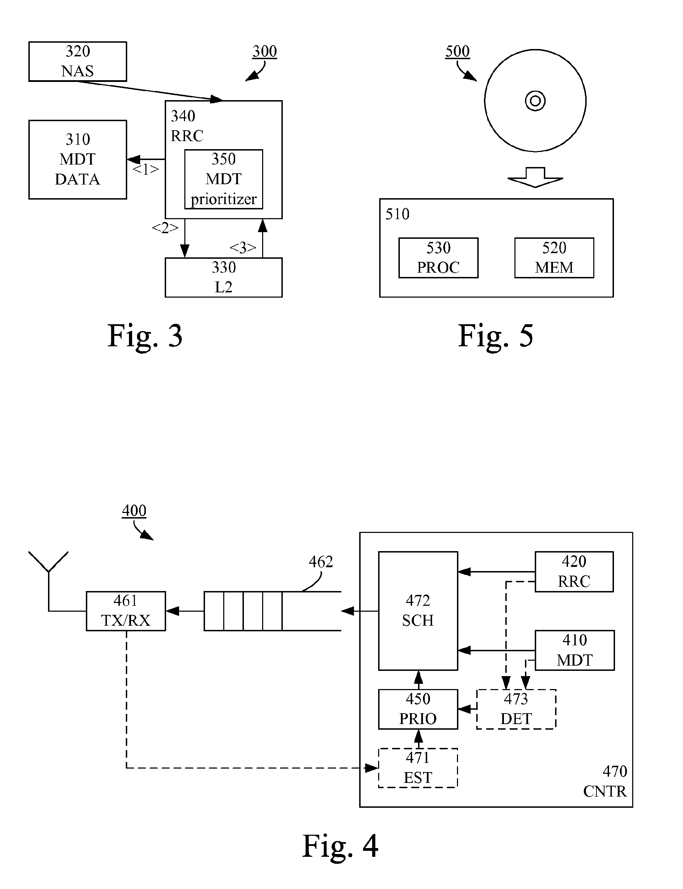

Detailed description of an example design in WCDMA (refer also to the example illustration 300 of Figure 3)

The following steps are carried out by RRC (340), which also receives NAS messages (320) for transmission.
1. Fetch MDT data (310) and create RRC messages.
2. Send down X MDT RRC message to L2 (330) (RLC).
3. Get status input from L2 (330) on transmission status of submitted MDT messages before new are sent down. Prioritize (350) between MDT data and NAS messages as explained above.

The status input in step 3 could be based on for example:
- Received L2 ACK (acknowledgement) from the network or
- Amount of data transmitted over the air interface

If X/Y messages are either ACK:ed or transmitted over the air interface and if there are more MDT messages to be created, go to step1.

When data is scheduled for transmission, the scheduling rules as described above may apply taken into account BLER, max output power status and logical channel transmission queue status.

Note: In WDMA, after a layer 3 (L3) message is placed in the L2 transmission queue, it typically cannot be superseded by other messages due to the RRC sequence number that is included in all messages that is also one of the input parameters for the integrity protection function.

Figure 4 illustrates an example arrangement 400 which may, for example, be comprised in a wireless communication device. The example arrangement 400 may be adapted to carry out one or more of the methods described herein, e.g. those described in connection with Figures 1, 2, and 3.

The example arrangement 400 comprises a transmission queue 462, a scheduler 472 and a prioritizer 450. The prioritizer 450 is adapted to assign priorities to various types of data (e.g. MDT data 410 and NAS/RRC data 420) as explained above, the scheduler 472 is adapted to place the data in the transmission queue based on the priorities, and the transmission queue 462 is adapted to provide data to a transmitter 461 adapted to transmit the data in accordance with the transmission queue. The transmitter 461 may or may not be considered as being part of the arrangement 400.

Optionally, the arrangement 400 may further comprise one or more estimators 471 adapted to estimate at least one of an uplink BLER and a UE output power, and provide the estimations to the prioritizer 450 which uses the estimations to determine how priorities should be assigned as explained above.

Also optionally, the arrangement 400 may further comprise a determiner 473 adapted to determine whether there is any MDT data 410 pending for transmission and whether there is any other relevant data (e.g. NAS/RRC 420) pending for transmission, and provide the determinations to the prioritizer 450 which uses them to determine how priorities should be assigned as explained above.

As illustrated in Figure 4, the scheduler 472, the prioritizer 450, the estimator(s) 471, and the determiner 473 may be organized as comprised in a controller 470.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device) comprising circuitry/logic or performing methods according to any of the embodiments. The electronic apparatus may, for example, be a portable or handheld mobile radio communication equipment, a mobile radio terminal, a mobile telephone, a pager, a communicator, an electronic organizer, a smartphone, a computer, a notebook, a USB-stick, a plug-in card, an embedded drive, or a mobile gaming device.

According to some embodiments, a computer program product comprises a computer readable medium such as, for example, a diskette or a CD-ROM 500 as illustrated in Figure 5. The computer readable medium 500 may have stored thereon a computer program comprising program instructions. The computer program may be loadable into a data-processing unit 530, which may, for example, be comprised in a mobile terminal 510. When loaded into the data-processing unit 530, the computer program may be stored in a memory 520 associated with or integral to the data-processing unit 530. According to some embodiments, the computer program may, when loaded into and run by the data-processing unit 530, cause the data-processing unit to execute method steps according to, for example, the methods shown in any of the Figures 1 to 3.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Hence, it should be understood that the details of the described embodiments are merely for illustrative purpose and by no means limiting.

## Claims

1. A method for a transmitter for a wireless communication device of scheduling a first type of data for transmission on a first radio bearer, wherein the first radio bearer is a signaling radio bearer adapted to carry the first type of data and a second type of data, the second type of data comprising at least one of Non-Access Stratum - NAS - messages and Radio Resource Control - RRC - messages, the method comprising:
assigning (110) a first priority to the first type of data and assigning a second priority to the second type of data, wherein the first priority is lower than the second priority;
placing (120, 223, 231) data of the first and second type in a transmission queue based on the first and second priorities; and
transmitting (170, 270) data of the first and second type in accordance with the transmission queue.

2. The method of claim 1 wherein the first type of data comprises Minimization of Drive Test - MDT - logging data organized in MDT messages.

3. The method of any of claims 1 through 2 further comprising, after placing (120, 223, 231) the data of the first and second type in a transmission queue and before transmitting (170, 270) data in accordance with the transmission queue:
estimating (140, 240) at least one of an uplink BLock Error Rate - BLER - and a User Equipment - UE - output power; and
if (150) at least one of a first condition and a second condition is fulfilled, suspending (160, 240) the transmission of the data of the first type until neither of the first and second condition is fulfilled, wherein the first condition is the estimated BLER being larger than a BLER threshold and the second condition is the estimated UE output power reaching a maximum UE output power.

4. The method of any of claims 1 through 3 wherein the step of placing (120) data of the first and second type in a transmission queue comprises determining (122, 222) whether there is any data of the first type pending for transmission, and, if there is data of the first type pending for transmission:
placing (125, 223) at least part of the data of the first type pending for transmission in the transmission queue;
determining (128, 228) whether there is any data of the second type pending for transmission; and
if there is data of the second type pending for transmission, placing (131, 231) the data of the second type pending for transmission in the transmission queue.

5. The method of claim 4 wherein placing (131, 231) the data of the second type pending for transmission in the transmission queue comprises:
placing (231) the data of the second type in front of the at least part of the data of the first type in the transmission queue when operating in accordance with Evolved Universal Mobile Telecommunication Standard Terrestrial Radio Access - E-UTRA-according to the Third Generation Partnership project- 3GPP; and
placing the data of the second type after the at least part of the data of the first type in the transmission queue when operating in accordance with Universal Mobile Telecommunication Standard Terrestrial Radio Access - UTRA - according to the Third Generation Partnership project- 3GPP.

6. The method of any of claims 1 through 5 wherein a second radio bearer, which is a data radio bearer, is adapted to carry a third type of data, further comprising:
assigning (110, 233) a third priority to the third type of data, wherein the third priority is higher than the first priority; and
placing (120, 233) data of the first and third type in the transmission queue based on the first and third priorities.

7. The method according to any of claims 1 through 6 wherein one or more of the first and second priorities are based on one or more of:
an amount of data of the first type pending for transmission; and
an amount of data of the second type pending for transmission.

8. The method of claim 7 combined with claim 6 wherein one or more of the first, second and third priorities are based on one or more of:
an amount of data of the first type pending for transmission;
an amount of data of the second type pending for transmission; and
an amount of data of the third type pending for transmission.

9. A computer program product comprising a computer readable medium (500), having thereon a computer program comprising program instructions, the computer program being loadable into a data-processing unit (530) and adapted to cause the data-processing unit (530) to execute the method according to any of claims 1 through 8 when the computer program is run by the data-processing unit (530).

10. An arrangement adapted to schedule a first type of data for transmission on a first radio bearer, wherein the first radio bearer is a signaling radio bearer adapted to carry the first type of data and a second type of data, the second type of data comprising at least one of Non-Access Stratum - NAS - messages and Radio Resource Control - RRC - messages, the arrangement comprising:
a prioritizer (450, 350) adapted to assign a first priority to the first type of data and assign a second priority to the second type of data, wherein the first priority is lower than the second priority;
a transmission queue (462, 330) adapted to provide data of the first and second type to a transmitter adapted to transmit the data of the first and second type in accordance with the transmission queue; and
a scheduler (472, 330) adapted to place data of the first and second type in the transmission queue based on the first and second priorities.

11. The arrangement of claim 10 further comprising one or more estimators (471, 330) adapted to estimate at least one of an uplink BLock Error Rate - BLER - and a User Equipment - UE - output power, wherein the prioritizer (450, 350) is further adapted to, in response to at least one of a first condition and a second condition being fulfilled, suspend the transmission of the data of the first type until neither of the first and second condition is fulfilled, wherein the first condition is the estimated BLER being larger than a BLER threshold and the second condition is the estimated UE output power reaching a maximum UE output power.

12. The arrangement of any of claims 10 through 11 further comprising a determiner (473, 340) adapted to determine whether there is any data of the first type pending for transmission and whether there is any data of the second type pending for transmission, wherein the prioritizer (450, 350) is adapted to:
cause the scheduler (472, 330) to schedule the data of the first and second types for transmission such that the data of the second type is transmitted before the data of the first type if there is data of the second type pending for transmission; and
cause the scheduler (472, 330) to schedule the data of the first type for transmission if there is no data of the second type pending for transmission.

13. The arrangement of any of claims 10 through 12 wherein a second radio bearer, which is a data radio bearer, is adapted to carry a third type of data, and wherein:
the prioritizer (450, 350) is further adapted to assign a third priority to the third type of data, wherein the third priority is higher than the first priority; and
the scheduler (472, 330) is further adapted to place data of the first and third type in the transmission queue based on the first and third priorities.

14. A wireless communication device comprising the arrangement of any of claims 10 through 13.

15. The wireless communication device of claim 14 wherein the wireless communication device is compliant with one or more of the Universal Mobile Telecommunication Standard Terrestrial Radio Access Network - UTRAN - and the Evolved Universal Mobile Telecommunication Standard Terrestrial Radio Access Network - E-UTRAN - according to the Third Generation Partnership project - 3GPP.
